# EUROPÄISCHE PATENTSCHRIFT

(11) **EP 2 220 483 B1**
(45) Veröffentlichungstag und Bekanntmachung des Hinweises auf die Patenterteilung: **19.10.2011**
(21) Anmeldenummer: 08860480.6
(22) Anmeldetag: 01.12.2008
(51) Int. Cl.: G01N 27/407

(54) **GASSENSOR**
GAS SENSOR
CAPTEUR DE GAZ

(30) Priorität: 10.12.2007 DE 102007059653
(43) Veröffentlichungstag der Anmeldung: 25.08.2010
(73) Patentinhaber: Siemens Aktiengesellschaft, 80333 München (DE)
(72) Erfinder: BISKUPSKI, Diana, 95448 Bayreuth (DE); FLEISCHER, Maximilian, 85635 Höhenkirchen (DE); MOOS, Ralf, 95447 Bayreuth (DE); SCHÖNAUER, Daniela, 95500 Heinersreuth (DE); WIESNER, Kerstin, 85640 Putzbrunn (DE)
(86) Internationale Anmeldenummer: PCT/EP2008/066486
(87) Internationale Veröffentlichungsnummer: WO 2009/074471

(56) Entgegenhaltungen:
- DE-A1- 3 739 396
- DE-A1- 4 408 504
- DE-A1-102006 016 033
- RALF MOOS: "A Brief Overview on Automotive Exhaust Gas Sensors Based on Electroceramics" INTERNATIONAL JOURNAL OF APPLIED CERAMIC TECHNOLOGY, Bd. 2, Nr. 5, 5. Oktober 2005 (2005-10-05), Seiten 401-413, XP002524648

## Beschreibung

Die Erfindung betrifft einen elektrochemischen Gassensor, der eine erste und eine zweite Elektrode aufweist. Weiterhin betrifft die Erfindung ein Verfahren zum Betrieb des elektrochemischen Gassensors.

Ein Gassensor gemäß Oberbegriff des Anspruchs 1 ist aus DE102006016033 bekannt.

Gassensoren werden heute bereits in vielen Bereichen der Technik eingesetzt, um steigenden Anforderungen an die Umweltverträglichkeit und Sicherheit zu genügen. Eine beispielhafte Anwendung für Gassensoren besteht in der Detektion von Ammoniak, NH₃, im Abgasstrang von Dieselmotoren. Dieses kann bei der selektiven katalytischen Reduktion, der sog. SCR, entstehen, mit der die Emission von Stickoxiden, NO_{X}, verringert werden soll.

Es ist bekannt, zur Detektion von Ammoniak im Automobilabgasstrang so genannte Mischpotentialsensoren zu verwenden. Bei diesen elektrochemischen Gassensoren steht eine erste und eine zweite Elektrode, wobei die zweite Elektrode aus einem anderen Material gefertigt ist als die erste Elektrode, in Kontakt mit der Gasumgebung, in der beispielsweise Ammoniak detektiert werden soll. Die beiden Elektroden sind über ein ionenleitendes, d.h. elektrolytisches, Material, beispielsweise YSZ (Yttrium-stabilisiertes Zirkonoxid) verbunden. In Abhängigkeit der Gaskonzentration stellt sich zwischen den Elektroden eine elektromotorische Kraft (EMK), d.h. Spannung, ein. Diese wird als Messsignal verwendet. Die zweite Elektrode wird dabei üblicherweise als passive Elektrode bezeichnet und ist beispielsweise aus Platin. Die erste Elektrode wird üblicherweise als aktive Elektrode bezeichnet und besteht aus einer komplexen Mischung aus einem Metalloxid, beispielsweise Wismut-Vanadium-Oxid, BiVO₄, mit einer Beimengung von beispielsweise einem Metall wie 5 % Magnesium. Die komplexen Materialmischungen müssen hierbei einer Reihe von Anforderungen genügen. So müssen sie ausreichend elektrisch leitfähig sein. Weiterhin müssen sie thermisch und chemisch ausreichend stabil sein für die oftmals heißen und aggressiven Gasumgebungen, in der sie zum Einsatz kommen sollen. Schließlich müssen die komplexen Materialmischungen möglichst katalytisch selektiv sein, d.h. sie müssen in der zu vermessenden Gasumgebung eine möglichst geringe Zahl von chemischen Reaktionen fördern, im Idealfall genau eine. Nachteilig ist an den bekannten Sensoren, dass ihr Aufbau, insbesondere der Aufbau der komplexen ersten Elektrode, sehr aufwändig ist.

Die der Erfindung zugrunde liegende Aufgabe ist es, einen Gassensor anzugeben, mit dem ein vereinfachter Aufbau realisierbar ist. Weiterhin soll für einen solchen Gassensor ein Betriebsverfahren angegeben werden, das einen vergrößerten Funktionsumfang erlaubt.

Die Aufgabe wird hinsichtlich des Gassensors durch einen kombinierten Gassensor mit den Merkmalen von Anspruch 1 gelöst. Hinsichtlich des Betriebsverfahrens wird die Aufgabe durch ein Verfahren zum Betrieb eines elektrochemischen Gassensors mit den Merkmalen von Anspruch 24 gelöst. Die abhängigen Ansprüche betreffen vorteilhafte Ausgestaltungen der erfindungsgemäßen Lösung.

Der erfindungsgemäße kombinierte Gassensor weist eine erste und eine zweite Elektrode auf. Die beiden Elektroden sind über ein ionenleitendes Material verbunden. Die erste Elektrode ist von einem ersten katalytisch aktiven Material wenigstens teilweise bedeckt. Zusätzlich ist ein resistiver Gassensor realisiert. Hierzu ist zumindest eine dritte Elektrode so vorgesehen, dass die Leitfähigkeit des ersten katalytischen Materials oder auch des zweiten oder weiteren katalytischen Materials bestimmbar ist. Hierzu steht bevorzugt die dritte Elektrode in direktem Kontakt mit dem ersten, zweiten oder weiteren katalytischen Material. Dabei ist es offensichtlich für die Vermessung des ersten katalytischen Materials zweckmäßig, wenn die dritte Elektrode nicht gleichzeitig in direktem elektrischem Kontakt mit der ersten oder zweiten Elektrode ist.

Hierdurch ist die Möglichkeit gegeben, neben dem oder den elektrochemischen Messsignalen ein weiteres, unabhängiges Signal zu erhalten, das je nach Material dem eines resistiven Gassensors entsprechen kann. Besonders vorteilhaft ist, dass die für einen resistiven Sensor normalerweise erforderlichen Bauteile wie Beheizung oder elektrische Auslesung mit minimalem Aufwand realisiert werden bzw. schon vorhanden sind.

Der elektrochemische Sensor basiert bevorzugt darauf, dass sich in bekannter Weise zwischen den Elektroden bei der Anwesenheit von katalytisch oxidierbaren Gasen eine Elektromotorische Kraft (EMK), d.h. elektrische Spannung einstellt. Die Elektroden dienen üblicherweise zum Abgreifen dieser Spannung; daher ist es zweckmäßig, dass die Elektroden eine ausreichende Leitfähigkeit aufweisen.

Ionenleitende Materialen werden auch als elektrolytische Materialien bezeichnet. Im erfindungsgemäßen elektrochemischen Sensor kommt bevorzugt ein festes elektrolytisches Material zum Einsatz. Beispiele hierfür sind Yttrium-stabiliertes Zirkonoxid, auch als YSZ bekannt oder Scandium-stabilisiertes Zirkonoxid ScSZ.

Die Elektroden stehen bei elektrochemischen Gassensoren zweckmäßigerweise nicht in direktem Kontakt zueinander, sondern stehen jeweils in Kontakt mit dem Elektrolyten, um die Ausbildung der Spannung zwischen den Elektroden als Reaktion auf Gase zuzulassen.

Hierzu gibt es verschiedene Aufbaumöglichkeiten für den Sensor. Bevorzugt ist der Sensor in planarer Aufbauweise realisiert. Hierfür wird bevorzugt ein Substrat eingesetzt. Dieses kann beispielsweise ein Aluminiumoxidplättchen sein. Andere Möglichkeiten bestehen beispielsweise in Saphir-, Quarz oder Siliziumsubstraten. Das Substrat trägt direkt oder indirekt die weiteren Elemente, d.h. wenigstens die Elektroden, das ionenleitende Material und die katalytische Schicht. Diese wiederum sind als aufeinander aufbauende Schichten realisiert. Eine weitere Aufbaumöglichkeit besteht in einem nichtplanaren Aufbau. Bei einem Beispiel für einen solchen Aufbau trägt ein spindelförmiger Aluminiumkörper die weiteren Elemente. Die Elektroden können dabei beispielsweise als Drähte realisiert sein, die gleichzeitig als Aufhängung für den Sensor dienen. Es ist auch nicht in jedem Fall ein Substrat nötig. So können die Elektroden oder der Ionenleiter so ausgestaltet sein, dass sie den elektrochemischen Sensor tragen.

Die erste Elektrode ist erfindungsgemäß von einer ersten katalytisch aktiven Schicht teilweise bedeckt oder auch ganz verdeckt. Vorzugsweise ist die Bedeckung im Bereich des ionenleitenden Materials realisiert. Bevorzugt, aber nicht zwingend, bedeckt die katalytisch aktive Schicht die erste Elektrode im Bereich des ionenleitenden Materials vollständig.

Beim Verfahren zur Herstellung des erfindungsgemäßen Gassensors wird ein ionenleitendes Material bereitgestellt. In Verbindung mit dem ionenleitenden Material werden die erste und die zweite Elektrode dargestellt. Schließlich wird ein erstes katalytisches Material derart auf die erste Elektrode aufgebracht, dass die erste Elektrode wenigstens teilweise davon bedeckt ist. Dabei spielt die Reihenfolge der Schritte keine Rolle, wobei bevorzugt die Herstellung derart durchgeführt wird, dass Bereiche im Sensor existieren, an denen das erste katalytische Material und der Ionenleiter aufeinandertreffen und gleichzeitig ein Gaszutritt in diese Bereiche möglich ist.

Beim erfindungsgemäßen Betriebsverfahren für den erfindungsgemäßen elektrochemischen Gassensor wird zwischen der ersten Elektrode und der zweiten Elektrode eine elektrische Spannung als Messsignal bestimmt und der elektrische Widerstand wenigstens einer der Katalytischen Schichten gemessen.

Bei der Erfindung wurde erkannt, dass ein Problem der bekannten elektrochemischen Sensoren mit zwei Elektroden darin besteht, dass bei diesen neben einer gewöhnlich als passiv bezeichneten Elektrode eine aktive Elektrode verwendet wird, die aus einem komplexen Materialgemisch besteht. Dieses Materialgemisch muss dabei zum einen ausreichend leitfähig sein, um die Funktion der Elektrode zu erfüllen und zum anderen in der Messumgebung ausreichend chemisch und thermisch stabil sein. Die Herstellung dieser Elektroden ist aufwendig und die Elektroden, die beispielsweise auf einem Gemisch aus einem Metalloxid wie BiVO₄ mit beispielsweise 5% Mg bestehen, weisen dennoch keine optimale Leitfähigkeit auf.

Hingegen ergibt sich vorteilhaft ein wesentlich einfacherer Aufbau und somit eine einfachere und günstigere Herstellung des Sensors, wenn die genannten Funktionen der Elektrode getrennt werden. Hierzu ist erfindungsgemäß die erste Elektrode in Verbindung mit dem ersten katalytisch aktiven Material vorgesehen.

Es ist vorteilhaft möglich, mehrere der erfindungsgemäßen Sensoren zu einem Sensorsystem zusammenzufassen, wobei dieses System dann eine Mehrzahl von ersten und zweiten Elektroden aufweisen kann. Redundante Elemente können in diesem Fall vorteilhaft weggelassen werden, so kann bei einem planaren Aufbau nur ein Substrat verwendet werden oder beispielsweise nur eine ionenleitende Schicht für eine Mehrzahl von Elektroden. Das System kann beispielsweise dazu dienen, mehr Informationen über die Gaszusammensetzung zu gewinnen oder gleiche Informationen redundant zu ermitteln.

Somit kann auch eine erste Elektrode, die je nach Ausgestaltung des Sensors auch als aktive Elektrode bezeichnet werden kann, realisiert werden, die vorzugsweise über ihre gesamte Ausdehnung leitfähiger ist als eine bekannte aktive Elektrode. Gleichzeitig kann vorteilhaft bzgl. des ersten katalytisch aktiven Materials auf ein Material zurückgegriffen werden, das beispielsweise bekannt ist aus dem Umfeld der PKW-Abgasreinigung oder von Feuerungsanlagen. Der spezifische elektrische Widerstand des Materials ist dabei nicht erheblich, da das Material nicht elektrisch leiten muss, kann also hoch oder gering sein. Bekannte Materialien sind oft leichter verfügbar und ihre chemische und thermische Stabilität sind bekannt und/oder optimiert.

Gemäß einer vorteilhaften Ausgestaltung der Erfindung besteht die erste Elektrode zu wenigstens 20% aus einem Metall. In weiteren Ausgestaltungsvarianten besteht die Elektrode zu wenigsten 50% oder wenigstens 95% aus einem Metall. Ein Aufbau aus 20%, 50% oder 95% eines Metallgemischs oder einer Legierung ist dabei ebenso möglich. In einer besonders vorteilhaften Ausgestaltung besteht die Elektrode im Rahmen des Machbaren vollständig aus dem Metall oder Metallgemisch oder der Legierung. Hierdurch werden eine besonders einfache Herstellung und ein einfacher und kostengünstiger Aufbau erzielt, wobei die elektrische Leitfähigkeit der Elektrode in optimaler Weise sehr hoch ist. Beispiele für mögliche Metalle sind Gold oder Platin, die sich insbesondere für Anwendungen bei hohen Temperaturen besonders eignen. Je nach Anwendung können aber auch andere Metalle zum Einsatz kommen wie beispielsweise Aluminium oder eine Wolfram/Titan-Legierung.

Es ist gemäß einer Ausgestaltung auch möglich, dass das Metallgemisch nicht homogen ist, indem beispielsweise ein Metall auf einem weiteren Metall aufgebracht ist, um beispielsweise eine verbesserte Haftung der gesamten Elektrode zu gewährleisten. Eine weitere Möglichkeit für den geschichteten Aufbau besteht darin, bei der ersten Elektrode eine Materialschicht vorzusehen, die eine Diffusion von Fremdmaterial, beispielsweise aus dem Elektrolyten, zu erschweren.

Besonders vorteilhaft ist es, wenn die Elektroden gemäß einer weiteren Ausgestaltung der Erfindung aus dem gleichen Material bestehen. Dies ermöglicht eine einfachere Herstellung, da beide Elektroden beispielsweise in einem Arbeitsschritt erzeugt werden können.

Alternativ ist es aber auch möglich, verschiedene Materialien für die beiden Elektroden zu verwenden. Dies kann beispielsweise vorteilhaft sein, wenn für die erste Elektrode ein Material verwendet wird, das eine Diffusion von Fremdmaterial wie beispielsweise aus dem ersten katalytisch aktiven Material erschwert. Die zweite Elektrode kann in diesem Fall aus einem einfacheren oder kostengünstigeren Material gefertigt sein.

Eine weitere vorteilhafte Ausgestaltung des elektrochemischen Gassensors ergibt sich dadurch, dass er wenigstens eine weitere erste Elektrode aufweist. Diese ist dann bevorzugt von einem weiteren katalytisch aktiven Material wenigstens teilweise bedeckt. Wie bei der ersten Elektrode ist es hier möglich, ein oder mehrere katalytische Materialien vorzusehen. Hierdurch wird es möglich, die relativen Spannungen von mehreren Elektroden gegeneinander zu bestimmen und auszuwerten. Dies kann zu redundanten und daher gesicherten Signalen oder zu zusätzlichem Informationsgehalt führen.

Hierzu wird vorzugsweise die Spannung zwischen jeder der ersten Elektroden und der zweiten Elektrode bestimmt und als Messsignal verwendet.

Gemäß einer bevorzugten Ausgestaltung wird das erste katalytisch aktive Material verschieden vom weiteren katalytisch aktiven Material gewählt. Das bedeutet, dass die beiden oder mehreren ersten Elektroden in Kontakt mit jeweils verschiedenen katalytischen Materialien stehen. Dies ermöglicht den Gewinn von zusätzlichen unabhängigen Messsignalen, die beispielsweise genauere Aussagen über die Gaszusammensetzung erlauben. Beispielsweise kann aus den Signalen zweier Elektroden auf die Konzentrationen zweier Gase geschlossen werden, auch wenn eine oder beide Elektroden in gewissem Maß auf beide Gase reagieren. Es kann somit mit zwei oder mehr ersten Elektroden ein integriertes Sensorarray, d.h. eine Mehrsensoranordnung realisiert werden. Der erfindungsgemäße Vorteil von vergleichweise einfacher Herstellung und Aufbau bleibt hier ebenfalls erhalten, indem auch hierbei die Funktionen der elektrischen Leitung und der katalytischen Aktivität aufgeteilt werden zwischen Elektrode und dem jeweiligen katalytisch aktiven Material.

Es ist möglich, den Sensor aufzubauen, in dem für jede erste Elektrode eine zweite, gewöhnlich als Referenzelektrode bezeichnete Elektrode vorgesehen ist. Bevorzugt weist der Sensor jedoch genau eine zweite Elektrode aufweist, da hierdurch ein Platzersparnis und ein einfacherer Aufbau möglich ist.

Bevorzugt wird ein erstes katalytisch aktives Material verwendet, das bei Temperaturen von weniger als 800°C einen spezifischen Widerstand von wenigstens 1 µΩm aufweist. In weiteren Alternativen weist das Material bei Temperaturen von weniger als 800°C einen spezifischen elektrischen Widerstand von wenigstens 1 mΩm auf; oder es weist bei Temperaturen von weniger als 400°C einen spezifischen elektrischen Widerstand von wenigstens 1 µΩm oder 1 mΩm auf.

Eine weitere Ausgestaltung der Erfindung besteht darin, dass die zweite Elektrode von einem zweiten katalytisch aktiven Material wenigstens teilweise bedeckt ist. Das bedeutet letztlich, dass wenigstens die erste und zweite Elektrode ähnlich oder gleich aufgebaut sind. In diesem Fall ist eine namentliche Aufteilung der Elektroden in eine aktive und eine passive Elektrode nicht möglich, vielmehr sind die Elektroden gleichberechtigt. Bevorzugt ist dann das erste katalytisch aktive Material verschieden vom zweiten katalytisch aktiven Material. Hierdurch wird ein Gassignal ermöglicht, wenn beide Elektroden in der Messumgebung sind, also im Wesentlichen das gleiche Gasgemisch sehen.

Alternativ kann aber auch das gleiche katalytische Material verwendet werden. Dann ist es zweckmäßig, wenn die Elektroden verschiedenen Gasumgebungen ausgesetzt werden, indem beispielsweise eine der Elektroden der Umgebungsluft ausgesetzt wird und die andere der Messgasumgebung.

Gemäß einer weiteren Alternative ist die zweite Elektrode wenigstens teilweise von einem Schutzmaterial, insbesondere einem perowskitischen, keramischen oder katalytischen Schutzmaterial, bedeckt. Hierdurch lässt sich eine erhöhte chemische Stabilität gewährleisten.

In einer vorteilhaften Ausgestaltung der Erfindung weist das erste, zweite und/oder weitere katalytische Material einen SCR-Katalysator, beispielsweise ein Zeolith oder ein Metalloxid wie Titanoxid oder Vanadiumoxid, oder NOx-Speicherkatalysator wie beispielsweise Platin mit Barium auf. Bei SCR-Katalysatoren handelt es sich um per se bekannte Materialien, die zur selektiven katalytischen Reduktion (=SCR) eingesetzt werden. Diese sind als chemisch und thermisch stabil bekannt und daher ideal einsetzbar. Weiterhin sind sie unschwer herstellbar.

Ist gemäß einer weiteren vorteilhaften Ausgestaltung das erste, zweite und/oder weitere katalytische Material porös, so hat das ein verbessertes Eindringen von Gas und daher ein verbessertes Sensorsignal zur Folge.

Der elektrochemische Gassensor weist bevorzugt ein Heizelement auf. Bei einem planaren Aufbau des Sensors kann so ein Heizelement beispielsweise als Heizmäander, also als elektrischer Widerstandsheizer ausgeführt sein. Eine Alternative besteht in einer Draht-Heizwendel, an der der Sensor beispielsweise auf einer Keramikumhüllung realisiert ist. Es ist auch möglich, mehr als ein Heizelement vorzusehen. Beispielsweise kann pro erster Elektrode ein Heizelement verwendet werden. Ein weiteres Beispiel besteht darin, dass der Sensor eine erste und eine zweite Elektrode und für jede der Elektroden ein Heizelement aufweist.

Das oder die Heizelemente dienen der Beheizung des Sensors, insbesondere, um die katalytisch aktiven Materialien auf eine optimale Betriebstemperatur zu bringen. Die optimale Temperatur hängt dabei von der Art des Materials und dem zu detektierenden Gas ab. Somit ist es vorteilhaft, gemäß einer weiteren Ausgestaltung der Erfindung den oder die Heizer so auszugestalten und zu verwenden, dass wenigstens ein Teil der Elektroden im laufenden Betrieb konstant auf verschiedene Temperaturen geheizt werden können. Somit kann beispielsweise unabhängig jede der Elektroden auf einer eigenen optimalen Temperatur gehalten werden, was eine große Flexibilität für die Verwendung des Sensors ermöglicht. Die Temperaturen für die Elektroden unterscheiden sich dabei bevorzugt um wenigstens 20°C, insbesondere um wenigstens 100°C.

Um einen negativen Einfluss des Spannungsabfalls im Heizer auf die Messung zu vermeiden, kann zwischen dem Heizer und den Elektroden eine Abschirmung vorgesehen sein, beispielsweise in Form einer Äquipotentialschicht zwischen dem Heizelement und den Elektroden.

Der elektrochemische Gassensor weist bevorzugt einen Temperatur-Sensor auf, wobei dieser beispielsweise auch in einem Element mit einem möglicherweise vorhandenen Heiter realisiert werden kann, beispielsweise als Platin-Heizmäander.

Es ist in Ausgestaltung der Erfindung auch möglich, zwei eigene, dritte Elektroden für die Auslesung des elektrischen Widerstands zu verwenden. Diese können beispielsweise als sog. Interdigitalkontakte, d.h. als fingerartig oder kammartig verzahnte Kontakte ausgeführt sein. Das ist besonders vorteilhaft, wenn das katalytische Material einen hohen elektrischen Widerstand aufweist, da durch die Interdigitalkontakte ein verringerter Widerstand gemessen wird.

Es ist auch möglich, in Ausgestaltung der Erfindung mehrere resistive Gassensoren zu verwirklichen, falls mehrere katalytisch aktive Materialien vorhanden sind. Dabei kann auch durch das Material der unterliegenden Elektrode, beispielsweise Gold und Platin, ein Unterschied in den sensitiven Eigenschaften von gleichen katalytisch aktiven Materialien gegeben sein. Hierzu wird zweckmäßigerweise für jedes der katalytisch aktiven Materialien wenigstens eine dritte Elektrode vorgesehen.

Eine weitere alternative oder zusätzliche Ausgestaltungsmöglichkeit besteht in der Realisierung eines 4-Punkt-Messaufbaus zur Bestimmung des elektrischen Widerstands der katalytischen Schichten durch eine entsprechende Ausgestaltung der dritten Elektroden.

Die dritten Elektroden sind vorzugsweise wenigstens teilweise auf dem ersten, zweiten oder weiteren katalytisch aktiven Material angeordnet. Alternativ können eine oder mehrere der dritten Elektroden auf der ersten oder anderen Elektroden und unter dem ersten oder zweiten oder weiteren katalytisch aktiven Material angeordnet sind, wobei vorzugsweise weiterhin zwischen diesen dritten Elektroden und der ersten Elektrode ein elektrisch isolierendes, poröses Material vorgesehen ist.

Die beschriebenen Sensoren lassen sich vorteilhaft in einem Sensorsystem einsetzen. Dabei kann auch in einer Ausgestaltung bei wenigstens einem Teil der Gassensoren im Bereichs jeweils wenigstens einer der Elektroden ein festlegbarer Sauerstoffpartialdruck eingestellt sein, beispielsweise indem die jeweilige Elektrode in Verbindung mit der Umgebungsluft steht, während die weiteren Elektroden in Verbindung mit dem Messgas stehen.

Vorteilhafte Anwendungen für as System oder den Sensor bestehen:
- im Abgasstrang eines PKW oder LKW, insbesondere bei Diesel-Fahrzeugen, beispielsweise zur Ammoniakdetektion bei der SCR, aber auch zur Detektion anderer relevanter Abgase,
- bei Feuerungsanlagen, Kraftwerken oder Gasturbinen zur Detektion von Abgasen,
- in Verbindung mit Katalysatoren, deren Zustand anhand der Messergebnisse des Sensors oder Sensorsystems überwacht werden kann,
- bei LKWs zur Detektion Ammoniak, mit dessen Überdosierung festgestellt werden soll, ob ausreichend oder überhaupt Harnstoff für die SCR vorhanden ist,
- zur Ammoniakdetektion bei der Herstellung von Düngemitteln,
- zur Leckdetektion bei Kühlanlagen, die Ammoniak verwenden.

Bei den Beispielen sind in der Hauptsache Anwendungen der Ammoniakdetektion genannt, der Sensor ist jedoch in keinem Fall darauf beschränkt. Die Gase, die detektiert werden können, können vorteilhaft durch eine geeignete Wahl der katalytisch aktiven Materialien sehr flexibel eingestellt werden.

Weitere Vorteile und Einzelheiten der Erfindung werden anhand von in der Zeichnung dargestellten beispielhaften Ausführungsmöglichkeiten erläutert. Die Figuren 1 und 2 zeigen dabei einen elektrochemischen Gassensor mit zwei Elektroden in Aufsicht und Seitenansicht. Die Figuren 3 und 4 zeigen einen elektrochemischen Gassensor mit drei Elektroden, wiederum in Aufsicht und in Seitenansicht. Die Figuren 5 und 6 zeigen einen kombinierten elektrochemischen und resistiven Gassensor in Auf- und Seitenansicht. Die Figuren 7 und 8 schließlich zeigen einen kombinierten elektrochemischen und resistiven Gassensor in Auf- und Seitenansicht. Fig.9 zeigt schematisch die Abhängigkeit des Messsignals zweier katalytisch aktiver Materialien von der Konzentration von NO und NH₃. Die Fig.10 und 11 zeigen schematisch den zeitlichen Verlauf von Reaktionen von elektrochemischen und kombinierten Sensoren auf verschiedene Konzentrationen von NO und NH₃.

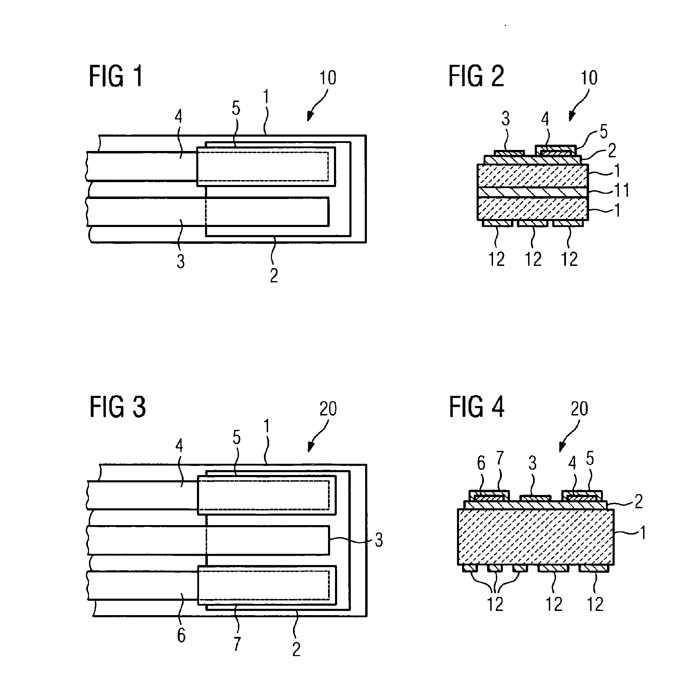

Figur 1 zeigt eine Aufsicht auf einen Teil eines ersten elektrochemischen Gassensors 10 und die Figur 2 denselben Sensor 10 in einer Ansicht von der Front des Sensors aus. Der erste elektrochemische Sensor 10 ist genau wie die weiteren beispielhaften Sensorvarianten 20, 30, 40 als planarer Sensor realisiert. Das bedeutet, dass die wesentlichen Elemente des Sensors als Schichten auf ein Keramiksubstrat 1 aufgebracht sind, wobei die Schichten meist dünn sind im Vergleich zu ihren lateralen Ausdehnungen. Es ist auch möglich, solche Sensoren in nicht-planarer Technik zu fertigen. Beispielsweise werden Gassensoren auch gerne auf Röhrchen aus Aluminiumoxid gefertigt.

Die erste Sensorvariante 10 gemäß Figur 1 und 2 ist auf ein Keramiksubstrat 1 aufgebaut. Dieses besteht beispielsweise aus Aluminiumoxid Al₂O₃. Eine Seite des Substrats, die in Figur 2 die Unterseite darstellt, weist einen Heizmäander 12, in diesem Fall aus Platin, auf. Die andere Seite des Keramiksubstrats 1 weist eine Elektrolytschicht 2 auf, beispielsweise aus Yttrium-stabilisiertem Zirkonoxid, gewöhnlich als YSZ bezeichnet. Auf der Elektrolytschicht 2 sind nebeneinander liegend eine erste Platinelektrode 4 und eine zweite Platinelektrode 3 vorgesehen. Diese ragen über die Elektrolytschicht 2 hinaus und dienen dem in den Figuren nicht weiter dargestellten elektrischen Abgriff des Gassensors 10. Die erste Platinelektrode 4 ist im Bereich der Elektrolytschicht 2 mit einer Katalysatorschicht 5 überzogen.

Die erste Sensorvariante 10 ist also vorteilhaft durch einen einfach herzustellenden Aufbau realisiert, indem zwei beispielsweise völlig gleichartige Platinelektroden 3, 4 verwendet werden. Eine unterschiedliche Reaktion auf verschiedene Gase wird durch die Katalysatorschicht 5 auf der ersten Platinelektrode 4 erreicht.

Eine zweite Sensorvariante 20 ist in den Figuren 3 und 4 schematisch gezeigt. Die zweite Sensorvariante 20 ist dabei teilweise analog zur ersten Sensorvariante 10 aufgebaut und es wird im Folgenden auf die Unterschiede eingegangen. Die zweite Sensorvariante 20 weist gegenüber der ersten Sensorvariante 10 eine weitere, dritte Platinelektrode 6 auf, wobei die dritte Platinelektrode 6 von einer weiteren Katalysatorschicht 7 überzogen ist. Zweckmäßig ist es, wenn die weitere Katalysatorschicht 7 aus einem anderen Material besteht als die Katalysatorschicht 5. Hierdurch stellen sich vorteilhaft verschiedene Gassensitivitäten der dritten Platinelektrode 6 und der ersten Platinelektrode 4 ein, wodurch die zweite Sensorvariante 20 mehr Informationen liefern kann als die erste Sensorvariante 10.

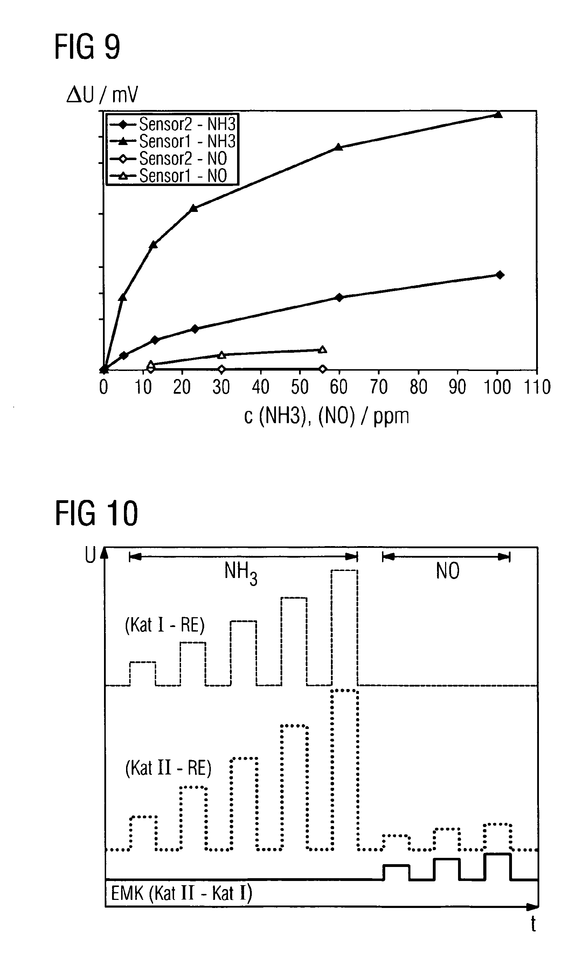

In einem Beispiel wird ein erster Katalysator verwendet, das eine Sensitivität auf NH3 und NO aufweist. Die andere erste Elektrode weist einen zweiten Katalysator auf, der lediglich auf NH3 reagiert. Von den Elektroden lassen sich Signale gewinnen, die schematisch in Fig. 9 dargestellt sind. Dort ist erkennbar, dass der zweite Katalysator nicht auf NO reagiert. Über einen geeigneten Vergleich der Messsignale, beispielsweise eine Linearkombination lassen sich aus den Messsignalen die Konzentrationen von NO und NH₃ bestimmen. Fig. 10 zeigt hierzu schematisiert die Reaktion, d.h. das Messsignal, das für die beiden Katalysatoren an den Elektroden ab greifbar ist bei Zugabe verschiedener Konzentrationen von NO und NH₃ in die Umgebung eines solchen Gassensors.

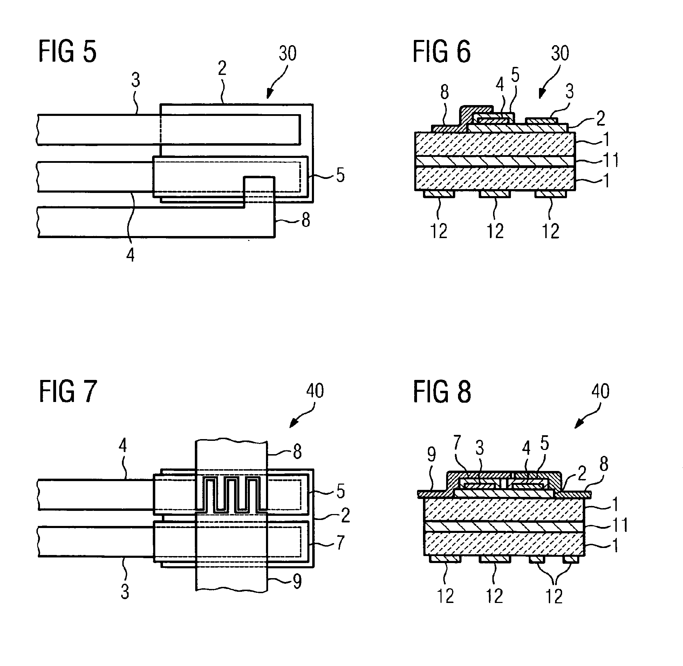

Die Figuren 5 und 6 zeigen schematisch einen ersten erfindungsgemäßen kombinierten Sensor 30. Für die bessere Übersicht wurde dabei in Figur 5 das Keramiksubstrat 1 nicht dargestellt.

Der erste kombinierte Sensor 30 weist in Analogie zur ersten Sensorvariante 10 eine erste und eine zweite Platinelektrode 3, 4 auf, wobei die erste Platinelektrode 4 wiederum von einer Katalysatorschicht 5 bedeckt ist. Im Gegensatz zum ersten Sensor 10 weist der erste kombinierte Sensor 30 jedoch eine erste Zusatzelektrode 8 auf, die in Teilen auf der Katalysatorschicht 5 liegt. Hierdurch wird neben der ersten Platinelektrode 4 durch die erste Zusatzelektrode 8 ein weiterer elektrischer Kontakt zur Katalysatorschicht 5 geschaffen. Über die erste Platinelektrode 4 und die erste Zusatzelektrode 8 können Änderungen der elektrischen Leitfähigkeit der Katalysatorschicht 5 erkannt und abgegriffen werden. Diese Leitfähigkeitsänderungen können als weiteres Messsignal zusätzlich zum elektrochemischen Messsignal, das über die erste und zweite Platinelektrode 3, 4 abgegriffen wird, verwendet werden. Die Katalysatorschicht 5 in Verbindung mit der ersten Zusatzelektrode 8 und der ersten Platinelektrode 4 fungiert somit als resistiver Gassensor. Ist die Katalysatorschicht 5 eine Metalloxidschicht, so handelt es sich um einen resistiven Metalloxidgassensor. Der erste kombinierte Sensor 30 stellt daher eine Kombination aus einem elektrochemischen Gassensor und einem resistiven Gassensor dar.

Eine weitere Alternative für den erfindungsgemäßen Aufbau in Form eines zweiten kombinierten Sensors 40 ist in den Figuren 7 und 8 schematisch dargestellt. Der zweite kombinierte Sensor 40 weist auf der Elektrolytschicht 2 nun wiederum die erste Platinelektrode 4 mit der Katalysatorschicht 5 auf. Daneben ist auf der zweiten Platinelektrode 3 nun eine weitere Katalysatorschicht 7 vorgesehen. Dabei ist es zweckmäßig, wenn die weitere Katalysatorschicht 7 und die Katalysatorschicht 5 aus verschiedenen Materialien bestehen. Um beim zweiten kombinierten Sensor 40 wiederum einen resistiven Gassensor zu verwirklichen, ist eine erste Zusatzelektrode 8 und eine zweite Zusatzelektrode 9 vorgesehen. Diese liegen in Teilen auf der Katalysatorschicht 5 und sind im Bereich der Katalysatorschicht 5 als so genannte Interdigitalkontakte ausgeführt. Beim zweiten kombinierten Sensor 40 wird die Leitfähigkeit der Katalysatorschicht 5 also mit der ersten und zweiten Zusatzelektrode 8, 9 bestimmt. Die erste Platinelektrode 4 muss hieran nicht beteiligt werden.

Vorteilhaft ist es, wenn die weitere Katalysatorschicht 7 einen hohen spezifischen elektrischen Widerstand aufweist oder wenn anstatt der weiteren Katalysatorschicht 7 eine isolierende Schutzschicht über die zweite Platinelektrode 3 gelegt wird. In diesem Fall kann die zweite Zusatzelektrode 9 wie in Figur 7 dargestellt in dieser Ausgestaltungsalternative über die zweite Platinelektrode 3 mit der weiteren Katalysatorschicht 7 oder der Schutzschicht hinwegführen, ohne eine wesentliche Verfälschung der Messsignale zu bewirken.

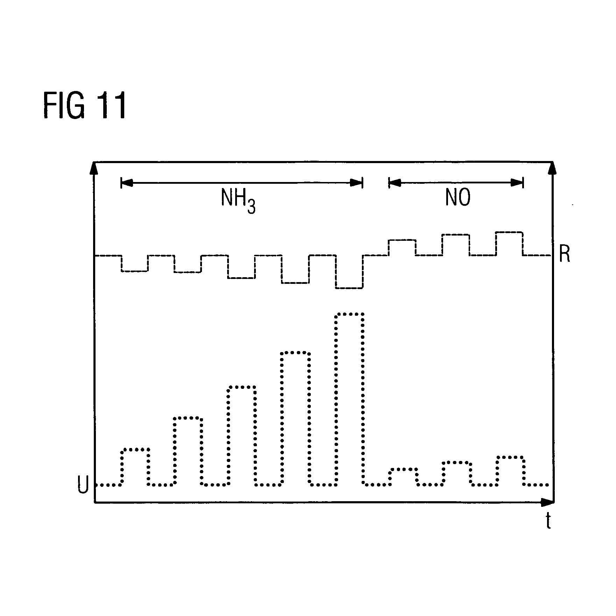

In Fig.11 ist ein schematischer Signalverlauf für einen solchen kombinierten Gassensor gezeigt. Zum einen ist dort die Reaktion der Spannung zwischen den Elektroden, d.h. das elektrochemische Signal gezeigt, zum anderen die Reaktion der Leitfähigkeit des Katalysators, d.h. das resistive Signal, das analog zu dem eines Metalloxid-Gassensors ist. Auch hier lassen sich durch eine geeignete Kombination der Messsignale, beispielsweise eine Linearkombination die Konzentrationen der Zielgase, hier beispielhaft NO und NH₃, bestimmen.

Bei den Ausführungsmöglichkeiten, die durch den zweiten kombinierten Sensor 40 gegeben sind, besteht eine besonders vorteilhafte Ausgestaltungsmöglichkeit darin, den Heizmäander 12 so zu gestalten, dass er das Keramiksubstrat 1 und dadurch den jeweiligen Sensor 20, 40 an verschiedenen Stellen verschieden stark aufheizt. Hierdurch kann erreicht werden, dass die verschiedenen Katalysatorschichten 5, 7 auf dem Sensor auf jeweils unterschiedlicher, möglichst optimaler Temperatur sind. Eine Alternative besteht darin, mehrere, getrennt voneinander betreibbare Heizmäander zu verwenden. Eine weitere vorteilhafte Ausgestaltungsmöglichkeit, die in diesem Beispiel in den Figuren 6 und 8 gezeigt ist, besteht in der Verwendung einer so genannten Äquipotentialschicht 11. Diese zweckmäßigerweise metallisch leitende Schicht 11 ist zweckmäßig in das Keramiksubstrat 1 flächig integriert und verhindert einen Einfluss der Spannung, die über den Heizmäander 12 abfällt, auf die Spannung, die zwischen den Elektroden 3, 4, 6 abgreifbar ist. Weiterhin ist es zweckmäßig, den Heizer 12 gleichzeitig als Temperatursensor zu verwenden.

## Patentansprüche

1. Kombinierter Gassensor (30, 40) mit einer ersten und einer zweiten Elektrode (3, 4, 6), wobei:
- die Elektroden (3, 4, 6) über ein ionenleitendes Material (2) verbunden sind,
- die erste Elektrode (4, 6) von einem ersten katalytisch aktiven Material (5) wenigstens teilweise bedeckt ist, und **gekennzeichnet dadurch, dass**
- zusätzlich ein resistiver Gassensor realisiert ist, indem eine dritte Elektrode (8, 9) so vorgesehen ist, dass sie in direktem Kontakt mit dem ersten katalytischen Material (5) und nicht in direktem Kontakt mit der ersten Elektrode (4) steht.

2. Kombinierter Gassensor (30, 40) gemäß Anspruch 1, bei dem die erste Elektrode (3, 6) zu wenigstens 20 % aus einem Metall besteht, insbesondere Gold oder Platin.

3. Kombinierter Gassensor (30, 40) gemäß Anspruch 1 oder 2, bei dem die Elektroden aus dem gleichen Material bestehen.

4. Kombinierter Gassensor (30, 40) gemäß einem der vorangehenden Ansprüche mit wenigstens einer weiteren ersten Elektrode (6), die von wenigstens einem weiteren katalytisch aktiven Material (7) wenigstens teilweise bedeckt ist.

5. Kombinierter Gassensor (30, 40) gemäß Anspruch 4, bei dem das erste katalytisch aktive Material (5) verschieden vom weiteren katalytisch aktiven Material (7) ist.

6. Kombinierter Gassensor (30, 40) gemäß einem der vorangehenden Ansprüche, der lediglich eine zweite Elektrode (3) aufweist.

7. Kombinierter Gassensor (30, 40) gemäß einem der vorangehenden Ansprüche, bei dem das erste katalytisch aktive Material (5) bei Temperaturen von weniger als 800°C einen spezifischen Widerstand von wenigstens 1 µΩm aufweist.

8. Kombinierter Gassensor (30, 40) gemäß einem der vorangehenden Ansprüche, bei dem die zweite Elektrode (3) von einem zweiten katalytisch aktiven Material (7) wenigstens teilweise bedeckt ist.

9. Kombinierter Gassensor (30, 40) gemäß Anspruch 8, bei dem das erste katalytisch aktive Material (5) verschieden vom zweiten katalytisch aktiven Material (7) ist.

10. Kombinierter Gassensor (30, 40) gemäß einem der vorangehenden Ansprüche, bei dem das erste, zweite und/oder weitere katalytische Material (5, 7) einen SCR-Katalysator oder NOx-Speicherkatalysator aufweist.

11. Kombinierter Gassensor (30, 40) gemäß einem der vorangehenden Ansprüche, bei dem das erste, zweite und/oder weitere katalytische Material (5, 7) porös ist.

12. Kombinierter Gassensor (30, 40) gemäß einem der vorangehenden Ansprüche, bei dem die zweite Elektrode (3) wenigstens teilweise von einem Schutzmaterial, insbesondere einem perowskitischen, keramischen oder katalytischen Schutzmaterial, bedeckt ist.

13. Kombinierter Gassensor (30, 40) gemäß einem der vorangehenden Ansprüche, der wenigstens ein Heizelement (12) aufweist.

14. Kombinierter Gassensor (30, 40) gemäß einem der Ansprüche 4 bis 10, der pro erster Elektrode (3, 6) ein Heizelement (12) aufweist.

15. Kombinierter Gassensor (30, 40) gemäß Anspruch 13 oder 14, bei dem das Heizelement (12) derart ausgestaltet ist, dass die Elektroden (3, 4, 6) zur gleichen Zeit auf verschiedene Temperaturen geheizt werden können.

16. Kombinierter Gassensor gemäß einem der Ansprüche 13 bis 15, der eine Äquipotentialschicht (11) zwischen dem Heizelement (12) und den Elektroden (3, 4, 6) aufweist.

17. Kombinierter Gassensor (30, 40) gemäß einem der vorangehenden Ansprüche, der einen Temperatur-Sensor aufweist.

18. Kombinierter Gassensor (30, 40) gemäß Anspruch 17 und einem der Ansprüche 13 bis 16, bei dem der Temperatur-Sensor und das Heizelement (12) als ein Element realisiert sind.

19. Kombinierter Gassensor (30, 40) gemäß einem der vorangehenden Ansprüche mit einer weiteren dritten Elektrode (8, 9).

20. Kombinierter Gassensor (30, 40) gemäß Anspruch 19, wobei die dritten Elektroden (8, 9) als Interdigital-Elektroden ausgestaltet sind.

21. Kombinierter Gassensor (30, 40) gemäß einem der vorangehenden Ansprüche, bei dem die dritten Elektroden (8, 9) wenigstens teilweise auf dem ersten katalytisch aktiven Material (5) angeordnet sind.

22. Kombinierter Gassensor (30, 40) gemäß einem der Ansprüche 1 bis 20, bei dem eine oder mehrere der dritten Elektroden (8, 9) auf der ersten Elektrode (4) und unter dem ersten katalytisch aktiven Material (5) angeordnet sind, wobei weiterhin zwischen diesen dritten Elektroden (8, 9) und der ersten Elektrode (4) ein elektrisch isolierendes, poröses Material vorgesehen ist.

23. Sensorsystem mit wenigstens einem Gassensor (30, 40) gemäß einem der vorangehenden Ansprüche, derart ausgestaltet, dass bei wenigstens einem Teil der Gassensoren (30, 40) im Bereichs jeweils einer der Elektroden (3, 4, 6) ein festlegbarer Sauerstoffpartialdruck eingestellt ist.

24. Verfahren zum Betrieb eines kombinierten Gassensors (30, 40) gemäß einem der Ansprüche 1 bis 22, bei dem zwischen der ersten Elektrode (4, 6) und der zweiten Elektrode (3) eine elektrische Spannung als Messsignal bestimmt wird, und bei dem als zusätzliches Messsignal der elektrische Widerstand wenigstens einer der katalytischen Schichten (5, 7) bestimmt wird.

25. Verfahren gemäß Anspruch 24, bei dem ein Gassensor (20) mit wenigstens zwei ersten Elektroden (4, 6) gemäß einem der Ansprüche 4 bis 22 verwendet wird, wobei für die ersten Elektroden (4, 6) zwischen einer jeweiligen ersten Elektrode (4, 6) und der zweiten Elektrode (3) eine jeweilige elektrische Spannung als Messsignal bestimmt wird.

26. verfahren gemäß Anspruch 24 oder 25, bei dem im Bereich der ersten oder zweiten Elektrode (3) ein konstanter Sauerstoff-Partialdruck eingestellt wird.

## Claims

1. Combined gas sensor (30, 40) comprising a first and a second electrode (3, 4, 6), wherein:
- the electrodes (3, 4, 6) are connected via an ion-conducting material (2), and
- the first electrode (4, 6) is covered, at least in part, by a first catalytically active material (5), and **characterised in that**
- a resistive gas sensor is also realised by providing a third electrode (8, 9) in such a way that it is in direct contact with the first catalytic material (5) and is not in direct contact with the first electrode (4).

2. Combined gas sensor (30, 40) according to claim 1, wherein at least 20% of the first electrode (3, 6) consists of a metal, in particular gold or platinum.

3. Combined gas sensor (30, 40) according to claim 1 or 2, wherein the electrodes consist of the same material.

4. Combined gas sensor (30, 40) according to one of the preceding claims, comprising at least one further first electrode (6) that is covered, at least in part, by at least one further catalytically active material (7).

5. Combined gas sensor (30, 40) according to claim 4, wherein the first catalytically active material (5) is different from the further catalytically active material (7).

6. Combined gas sensor (30, 40) according to one of the preceding claims, comprising merely a second electrode (3).

7. Combined gas sensor (30, 40) according to one of the preceding claims, wherein the first catalytically active material (5) exhibits a specific resistance of at least 1µΩm at temperatures below 800°C.

8. Combined gas sensor (30, 40) according to one of the preceding claims, wherein the second electrode (3) is covered, at least in part, by a second catalytically active material (7) .

9. Combined gas sensor (30, 40) according to claim 8, wherein the first catalytically active material (5) is different from the second catalytically active material (7).

10. Combined gas sensor (30, 40) according to one of the preceding claims, wherein the first, second and/or further catalytic material (5, 7) comprises an SCR catalytic converter or NOₓ storage catalytic converter.

11. Combined gas sensor (30, 40) according to one of the preceding claims, wherein the first, second and/or further catalytic material (5, 7) is porous.

12. Combined gas sensor (30, 40) according to one of the preceding claims, wherein the second electrode (3) is covered, at least in part, by a protective material, in particular a perovskitic, ceramic or catalytic protective material.

13. Combined gas sensor (30, 40) according to one of the preceding claims, comprising at least one heating element (12).

14. Combined gas sensor (30, 40) according to one of claims 4 to 10, comprising a heating element (12) for each first electrode (3, 6).

15. Combined gas sensor (30, 40) according to claim 13 or 14, wherein the heating element (12) is embodied in such a way that the electrodes (3, 4, 6) can be heated to different temperatures at the same time.

16. Combined gas sensor according to one of claims 13 to 15, comprising an equipotential layer (11) between the heating element (12) and the electrodes (3, 4, 6).

17. Combined gas sensor (30, 40) according to one of the preceding claims, comprising a temperature sensor.

18. Combined gas sensor (30, 40) according to claim 17 and one of claims 13 to 16, wherein the temperature sensor and the heating element (12) are formed as a single element.

19. Combined gas sensor (30, 40) according to one of the preceding claims, comprising a further third electrode (8, 9).

20. Combined gas sensor (30, 40) according to claim 19, wherein the third electrodes (8, 9) are embodied as interdigital electrodes.

21. Combined gas sensor (30, 40) according to one of the preceding claims, wherein the third electrodes (8, 9) are arranged, at least in part, on the first catalytically active material (5).

22. Combined gas sensor (30, 40) according to one of claims 1 to 20, wherein one or more of the third electrodes (8, 9) are arranged on the first electrode (4) and beneath the first catalytically active material (5), an electrically insulating, porous material also being provided between these third electrodes (8, 9) and the first electrode (4).

23. Sensor system comprising at least one gas sensor (30, 40) according to one of the preceding claims, embodied in such a way that a definable oxygen partial pressure is set in at least some of the gas sensors (30, 40), in each case in the region of one of the electrodes (3, 4, 6).

24. Method for operating a combined gas sensor (30, 40) according to one of claims 1 to 22, wherein an electrical voltage is determined as a measuring signal between the first electrode (4, 6) and the second electrode (3), and wherein the electrical resistance of at least one of the catalytic layers (5, 7) is determined as an additional measuring signal.

25. Method according to claim 24, wherein a gas sensor (20) comprising at least two first electrodes (4, 6) according to one of claims 4 to 22 is used, a respective electrical voltage being determined between a respective first electrode (4, 6) and the second electrode (3) as a measuring signal for the first electrodes (4, 6).

26. Method according to claim 24 or 25, wherein a constant oxygen partial pressure is set in the region of the first or second electrode (3).

## Revendications

1. Capteur ( 30, 40 ) de gaz combiné, comprenant une première et une deuxième électrodes ( 3, 4, 6 ), dans lequel :
- les électrodes ( 3, 4, 6 ) sont reliées par une matière ( 2 ) conductrice des ions,
- la première électrode ( 4, 6 ) est recouverte au moins en partie d'une première matière ( 5 ) active catalytiquement, et
**caractérisé en ce que**
- il est réalisé en plus un capteur de gaz résistif, en prévoyant une troisième électrode ( 8, 9 ), de façon à ce qu'elle soit en contact direct avec la première matière catalytique et de manière ce qu'elle ne soit pas en contact direct avec la première électrode ( 4 ).

2. Capteur ( 30, 40 ) de gaz combiné suivant la revendication 1, dans lequel la première électrode ( 3, 6 ) est au moins pour 20 % en un métal, notamment en or ou en platine.

3. Capteur ( 30, 40 ) de gaz combiné suivant la revendication 1 ou 2, dans lequel les électrodes sont en la même matière.

4. Capteur ( 30, 40 ) de gaz combiné suivant l'une des revendications précédentes, ayant au moins une autre première électrode ( 6 ), qui est recouverte au moins en partie d'au moins une autre matière ( 7 ) active catalytiquement.

5. Capteur ( 30, 40 ) de gaz combiné suivant la revendication 4, dans lequel la première matière ( 5 ) active catalytiquement est différente de l'autre matière ( 7 ) active catalytiquement.

6. Capteur ( 30, 40 ) de gaz combiné suivant l'une des revendications précédentes, qui a seulement une deuxième électrode ( 3 ).

7. Capteur ( 30, 40 ) de gaz combiné suivant l'une des revendications précédentes, dans lequel la première matière ( 5 ) active catalytiquement a, à des températures de moins de 800°C, une résistance spécifique de moins de 1 µΩm.

8. Capteur ( 30, 40 ) de gaz combiné suivant l'une des revendications précédentes, dans lequel la deuxième électrode ( 3 ) est recouverte au moins en partie d'une deuxième matière ( 7 ) active catalytiquement.

9. Capteur ( 30, 40 ) de gaz combiné suivant la revendication 8, dans lequel la première matière ( 5 ) active catalytiquement est différente de la deuxième matière ( 7 ) active catalytiquement.

10. Capteur ( 30, 40 ) de gaz combiné suivant l'une des revendications précédentes, dans lequel la première, deuxième et/ou autre matières ( 5, 7 ) catalytiques comportent un catalyseur SCR ou un catalyseur d'accumulation de NOx.

11. Capteur ( 30, 40 ) de gaz combiné suivant l'une des revendications précédentes, dans lequel la première, deuxième et/ou autre matières ( 5, 7 ) catalytiques sont poreuses.

12. Capteur ( 30, 40 ) de gaz combiné suivant l'une des revendications précédentes, dans lequel la deuxième électrode ( 3 ) est recouverte au moins en partie d'une matière de protection, notamment d'une matière de protection perowskitique, céramique ou catalytique.

13. Capteur ( 30, 40 ) de gaz combiné suivant l'une des revendications précédentes, qui comporte au moins un élément ( 12 ) de chauffage.

14. Capteur ( 30, 40 ) de gaz combiné suivant l'une des revendications 4 à 10, qui a un élément ( 12 ) de chauffage par première électrode ( 3, 6 ).

15. Capteur ( 30, 40 ) de gaz combiné suivant la revendication 13 ou 14, dans lequel l'élément ( 12 ) de chauffage est tel que les électrodes ( 3, 4, 6 ) peuvent être chauffées en même temps à des températures différentes.

16. Capteur ( 30, 40 ) de gaz combiné suivant l'une des revendications 13 à 15, qui a une couche ( 11 ) équipotentielle entre l'élément ( 12 ) de chauffage et les électrodes ( 3, 4, 6 ).

17. Capteur ( 30, 40 ) de gaz combiné suivant l'une des revendications précédentes, qui comporte un capteur de température.

18. Capteur ( 30, 40 ) de gaz combiné suivant la revendication 17 et l'une des revendications 13 à 16, dans lequel le capteur de température et l'élément ( 12 ) de chauffage sont réalisés en un élément.

19. Capteur ( 30, 40 ) de gaz combiné suivant l'une des revendications précédentes, comprenant une autre troisième électrode ( 8, 9 ).

20. Capteur ( 30, 40 ) de gaz combiné suivant la revendication 19, dans lequel les troisièmes électrodes ( 8, 9 ) sont conformées en électrodes interdigitées.

21. Capteur ( 30, 40 ) de gaz combiné suivant l'une des revendications précédentes, dans lequel les troisièmes électrodes ( 8, 9 ) sont disposées au moins en partie sur la première matière ( 5 ) active catalytiquement.

22. Capteur ( 30, 40 ) de gaz combiné suivant l'une des revendications 1 à 20, dans lequel une ou plusieurs des troisièmes électrodes ( 8, 9 ) sont disposées sur la première électrode ( 4 ) et sous la première matière ( 5 ) active catalytiquement, dans lequel, en outre, une matière poreuse et isolante électriquement est prévue entre ces troisièmes électrodes ( 8, 9 ) et la première électrode ( 4 ).

23. Système de capteur, comprenant au moins un capteur ( 30, 40 ) de gaz suivant l'une des revendications précédentes, conformé de manière à ce que, pour au moins une partie des capteurs ( 30, 40 ) de gaz, il est établi, dans la zone de respectivement l'une des électrodes ( 3, 4, 6 ), une pression partielle d'oxygène, qui peut être fixée.

24. Procédé pour faire fonctionner un capteur ( 30, 40 ) de gaz combiné suivant l'une des revendications 1 à 22, dans lequel on détermine comme signal de mesure une tension électrique entre la première électrode ( 4, 6 ) et la deuxième électrode ( 3 ) et dans lequel on détermine comme signal de mesure supplémentaire la résistance électrique d'au moins l'une des couches ( 5, 7 ) catalytiques.

25. Procédé suivant la revendication 24, dans lequel on utilise un capteur ( 20 ) de gaz ayant au moins deux premières électrodes ( 4, 6 ) suivant l'une des revendications 4 à 22, dans lequel on détermine pour les premières électrodes ( 4, 6 ) comme signal de mesure une tension électrique respective entre une première électrode ( 4, 6 ) respective et la deuxième électrode ( 3 ).

26. Procédé suivant la revendication 24 ou 25, dans lequel on établit une pression partielle d'oxygène constante dans la zone de la première ou de la deuxième électrode ( 3 ).
